# EUROPEAN PATENT APPLICATION

(11) **EP 4 597 028 A1**
(43) Date of publication of application: **06.08.2025**
(21) Application number: 24218711.0
(22) Date of filing: 10.12.2024
(51) Int. Cl.: G01B 11/24, G01B 11/02

(54) **APPARATUS AND METHOD FOR MEASURING WRINKLES IN UNCOATED PORTION OF ELECTRODE PLATE**

(30) Priority: 31.01.2024 KR 20240014825
(71) Applicant: SAMSUNG SDI CO., LTD., Yongin-si, Gyeonggi-do 17084 (KR)
(72) Inventor: PARK, Jun Ho, 17084 Yongin-si (KR); LIM, Byeong Hui, 17084 Yongin-si (KR); JANG, Jae Soon, 17084 Yongin-si (KR); KIM, Jong Man, 17084 Yongin-si (KR)
(74) Representative: Marks & Clerk LLP

(57) **Abstract**

An apparatus and method are provided for objectively measuring wrinkles in an uncoated portion of an electrode plate after drying of the electrode plate based on a quantification algorithm for wrinkle measurement. The apparatus includes an electrode plate transfer unit, a wrinkle measurement unit, a memory configured to store a preset preprocessing algorithm and a preset wrinkle level determination algorithm based on pre-coating measurement data of a dried electrode plate, and at least one processor configured to execute computer-readable instructions included in the memory. The at least one processor is set to acquire wrinkle measurement data of the dried electrode plate through the wrinkle measurement unit, to perform preprocessing to remove a coated portion from the acquired wrinkle measurement data based on the preset preprocessing algorithm, and to derive the grade of the preprocessed wrinkle measurement data based on the preset wrinkle level determination algorithm.

## Description

### BACKGROUND

### 1. Field

Embodiments relate to an apparatus and method for measuring wrinkles in an uncoated portion of an electrode plate after drying of the electrode plate based on a quantification algorithm for wrinkle measurement.

### 2. Description of the Related Art

A secondary battery may be formed by inserting an electrode assembly, in which a positive electrode plate, a negative electrode plate, and a separator are wound, into a case and sealing the case with a cap assembly. The positive electrode plate or the negative electrode plate (hereinafter referred to as an "electrode plate") may include an active material coated portion, in which an aluminum or copper thin film is coated with slurry of an active material, and an uncoated portion. The electrode plate may be subjected to a rolling process to increase adhesion between the active material coated portion and an electrode current collector and to increase capacity density of the active material. After drying, the rolled electrode plate may pass through a cutter of a certain width so as to be cut into a predetermined size.

A process of manufacturing the secondary battery may include an electrode process, an assembly process, and a formation process. The electrode process may be a process for manufacturing a positive electrode and a negative electrode, and may be divided into a mixing process, a coating process, a pressing process, and a slitting process. In the coating process, compounds that are evenly mixed in the mixing process may be applied to the surface of a substrate of each electrode plate such that the shape of each of the compounds is maintained. The coating process may be performed by moving the substrate (current collector) on a roller, applying the compounds to the surface of the substrate, and drying the same using hot air.

In the coating process, wrinkles may occur in the uncoated portion of the electrode plate after drying of the electrode plate, and the level of wrinkles in the uncoated portion must be accurately determined and minimized in order to improve the quality of a final product. Wrinkles in the uncoated portion are generally defined by the subjective criteria of an operator. As such, the level of wrinkles may be determined depending on the subjective criteria, and therefore there may be differences between evaluators and there is a lack of formal standards.

Therefore, it is desirable to provide a quantitative measurement and comparison method of wrinkle levels for defining wrinkles in the electrode plate after drying of the electrode plate.

The above information disclosed in this section is for enhancement of understanding of the present disclosure, and therefore, it may contain information that does not constitute related (or prior) art.

### SUMMARY

The disclosure includes an apparatus and method for measuring wrinkles in an uncoated portion of an electrode plate after drying of the electrode plate based on a quantification algorithm for wrinkle measurement in real time and providing quantitative results.

These and other aspects and features of the present disclosure will be described in or will be apparent from the following description of embodiments of the present disclosure.

An apparatus for measuring wrinkles in an uncoated portion of an electrode plate according to some embodiments to accomplish the above object includes an electrode plate transfer unit configured to transfer a dried electrode plate in a longitudinal direction, a wrinkle measurement unit configured to measure wrinkles in the dried electrode plate in a width direction during transfer of the dried electrode plate in the longitudinal direction, a memory configured to store a preset preprocessing algorithm and a preset wrinkle level determination algorithm based on pre-coating measurement data of the dried electrode plate, and at least one processor connected to the memory, the at least one processor being configured to execute computer-readable instructions included in the memory, wherein the at least one processor is set to acquire wrinkle measurement data of the dried electrode plate through the wrinkle measurement unit, to perform preprocessing to remove a coated portion, which is a coated region, from the acquired wrinkle measurement data based on the preset preprocessing algorithm, and to derive the grade of the preprocessed wrinkle measurement data based on the preset wrinkle level determination algorithm.

The wrinkle measurement data may include position-specific wrinkle height value data of the dried electrode plate and image data converted based on position-specific wrinkle height values of the dried electrode plate.

The wrinkle measurement unit may include a first wrinkle measurement unit located above an A side of the dried electrode plate to measure wrinkles in the A side, the first wrinkle measurement unit being configured to continuously acquire position-specific wrinkle measurement data within a reference length of the A side in the longitudinal direction, and a second wrinkle measurement unit located above a B side of the dried electrode plate to measure wrinkles in the B side, the second wrinkle measurement unit being configured to continuously acquire position-specific wrinkle measurement data within a reference length of the B side in the longitudinal direction.

The wrinkle measurement unit may include a two-dimensional and/or three-dimensional laser displacement sensor.

The at least one processor may be set to correct the tilt of the dried electrode plate based on the acquired wrinkle measurement data in order to perform the preprocessing and to remove the coated portion based on the tilt-corrected wrinkle measurement data.

The at least one processor may be set to calculate the tilt of the dried electrode plate using a linear regression model based on the average data of pre-coating data in order to correct the tilt of the dried electrode plate, to derive one minimum point of the uncoated portion based on the calculated tilt of the dried electrode plate, to obtain a linear equation based on the one minimum point of the uncoated portion and the tilt of the dried electrode plate to generate data for correction, and to correct the tilt of the dried electrode plate based on the acquired wrinkle measurement data and the data for correction.

The at least one processor may be set to calculate the average data of the tilt-corrected wrinkle measurement data in order to remove the coated portion and to derive a coating boundary based on the average data.

The at least one processor may be set to set the average data as a coating boundary height in order to derive the coating boundary, to set an initial value of points equal to or less than the set coating boundary height as a boundary start point, and to set a boundary end point in addition to the boundary start point based on a value obtained by converting the length of the uncoated portion into the number of points.

The preset wrinkle level determination algorithm may be set to determine the grade of the preprocessed wrinkle measurement data based on a preset height data absolute value and ratio.

The at least one processor may be set to determine, if another grade is determined within a set length of the dried electrode plate in the longitudinal direction, the other grade to be the lowest grade.

A method of measuring wrinkles in an uncoated portion of an electrode plate according to some embodiments to accomplish the above object includes acquiring wrinkle measurement data of a dried electrode plate through a wrinkle measurement unit configured to measure wrinkles in the dried electrode plate in a width direction during transfer of the dried electrode plate in a longitudinal direction through an electrode plate transfer unit, performing preprocessing to remove a coated portion, which is a coated region, from the acquired wrinkle measurement data based on a preset preprocessing algorithm, and deriving the grade of the preprocessed wrinkle measurement data based on a preset wrinkle level determination algorithm.

The wrinkle measurement data may include position-specific wrinkle height value data of the dried electrode plate and image data converted based on position-specific wrinkle height values of the dried electrode plate.

The step of acquiring the wrinkle measurement data of the dried electrode plate may include continuously acquiring position-specific wrinkle measurement data within a reference length of an A side of the dried electrode plate in the longitudinal direction through a first wrinkle measurement unit located above the A side to measure wrinkles in the A side and continuously acquiring position-specific wrinkle measurement data within a reference length of a B side of the dried electrode plate in the longitudinal direction through a second wrinkle measurement unit located above the B side to measure wrinkles in the B side.

The wrinkle measurement unit may include a two-dimensional and/or three-dimensional laser displacement sensor.

The step of performing the preprocessing may include correcting the tilt of the dried electrode plate based on the acquired wrinkle measurement data and removing the coated portion based on the tilt-corrected wrinkle measurement data.

The step of correcting the tilt of the dried electrode plate may include calculating the tilt of the dried electrode plate using a linear regression model based on the average data of pre-coating data in order to correct the tilt of the dried electrode plate, deriving one minimum point of the uncoated portion based on the calculated tilt of the dried electrode plate, obtaining a linear equation based on the one minimum point of the uncoated portion and the tilt of the dried electrode plate to generate data for correction and correcting the tilt of the dried electrode plate based on the acquired wrinkle measurement data and the data for correction.

The step of removing the coated portion may include calculating the average data of the tilt-corrected wrinkle measurement data and deriving a coating boundary based on the average data.

The step of deriving the coating boundary may include setting the average data as a coating boundary height, setting an initial value of points equal to or less than the set coating boundary height as a boundary start point, and setting a boundary end point in addition to the boundary start point based on a value obtained by converting the length of the uncoated portion into the number of points.

The preset wrinkle level determination algorithm may be set to determine the grade of the preprocessed wrinkle measurement data based on a preset height data absolute value and ratio.

The step of deriving the grade of the preprocessed wrinkle measurement data may include determining, if another grade is determined within a set length of the dried electrode plate in the longitudinal direction, the other grade to be the lowest grade.

A method of measuring wrinkles in an uncoated portion of an electrode plate as disclosed herein, wherein the method is performed using an apparatus for measuring wrinkles in an uncoated portion of an electrode plate as disclosed herein.

A method of manufacturing an electrode plate, the method comprising coating a portion of an electrode plate to form a coated electrode plate having a coated portion and an uncoated portion, and measuring wrinkles in an uncoated portion of the electrode plate using any of the methods of measuring wrinkles disclosed herein.

A method of manufacturing an electrode plate, comprising coating a portion of an electrode plate to form a coated electrode plate having a coated portion and an uncoated portion, determining a quality grade of the coated electrode plate by measuring wrinkles in an uncoated portion of the electrode plate using any of the methods of measuring wrinkles disclosed herein, comparing the quality grade to a quality grade cutoff, and accepting the electrode plate if the quality grade is above the quality grade cutoff.

A method of manufacturing an electrode plate, comprising coating a portion of an electrode plate to form a coated electrode plate having a coated portion and an uncoated portion, determining a quality grade of the coated electrode plate by measuring wrinkles in an uncoated portion of the electrode plate using any of the methods of measuring wrinkles disclosed herein, comparing the quality grade to a quality grade cutoff, and rejecting the electrode plate if the quality grade is below the quality grade cutoff.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic view of an A-side measurement unit of an apparatus for measuring wrinkles in an uncoated portion of an electrode plate according to some embodiments;
FIG. 2 is a schematic view of a B-side measurement unit of the apparatus for measuring wrinkles in the uncoated portion of the electrode plate according to some embodiments;
FIG. 3 is a block diagram schematically showing the apparatus for measuring wrinkles in the uncoated portion of the electrode plate according to some embodiments;
FIG. 4 is a flowchart illustrating a method of measuring wrinkles in an uncoated portion of an electrode plate according to some embodiments;
FIG. 5 is a flowchart illustrating a tilt correction algorithm according to some embodiments;
FIG. 6 is a graph illustrating the results of the tilt correction algorithm according to some embodiments;
FIG. 7 is a flowchart illustrating a coated portion removal algorithm according to some embodiments;
FIG. 8 is a graph illustrating the results of the coated portion removal algorithm according to some embodiments;
FIG. 9 is a graph illustrating the results of a preprocessing algorithm according to some embodiments;
FIG. 10 is a view showing results with and without application of the preprocessing algorithm according to some embodiments for comparison therebetween;
FIG. 11 is a graph illustrating grade criteria of a wrinkle level determination algorithm according to some embodiments; and
FIG. 12 is a view showing wrinkle determination results according to some embodiments.

### DETAILED DESCRIPTION OF EXAMPLE EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

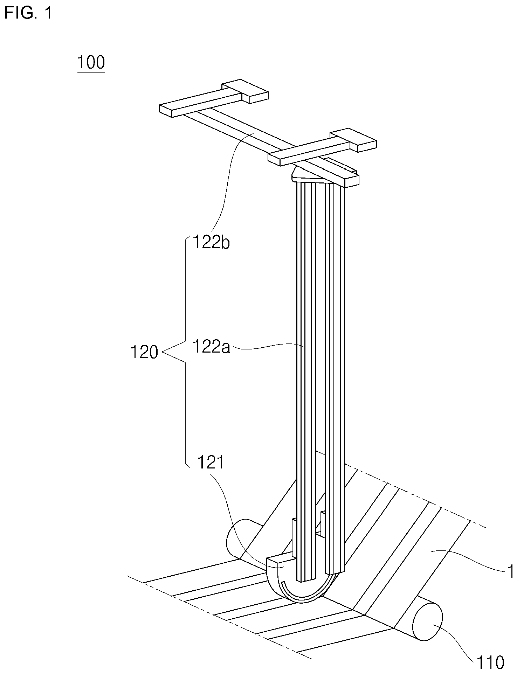

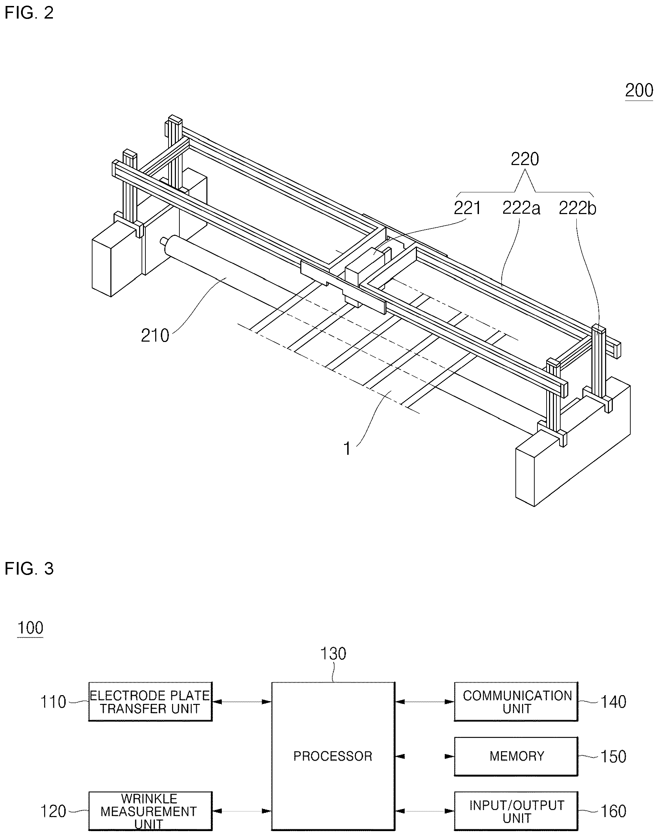

FIG. 1 is a schematic view of an A-side measurement unit of an apparatus for measuring wrinkles in an uncoated portion of an electrode plate according to some embodiments. FIG. 2 is a schematic view of a B-side measurement unit of the apparatus for measuring wrinkles in the uncoated portion of the electrode plate according to some embodiments. "A-side" and "B-side" may for example refer to first and second sides of the electrode plate.

Referring to FIG. 1 and FIG. 2, the apparatus 100 and 200 for measuring wrinkles in the uncoated portion of the electrode plate may include an electrode plate transfer unit 110 and 210, a wrinkle measurement unit 120 and 220, and a processor 130. The electrode plate transfer unit 110 and 210 and the wrinkle measurement unit 120 and 220 may include a first electrode plate transfer unit 110 configured to transfer an electrode plate 1 with the A side of the electrode plate 1 facing upward and a first wrinkle measurement unit 120 configured to measure wrinkles in an A side of the electrode plate 1 (see FIG. 1). The electrode plate transfer unit 110 and 210 and the wrinkle measurement unit 120 and 220 may include a second electrode plate transfer unit 210 configured to transfer an electrode plate 1 with a B side of the electrode plate 1 facing upward and a second wrinkle measurement unit 220 configured to measure wrinkles in the B side of the electrode plate 1 (see FIG. 2).

In this specification, the apparatus 100 and 200 for measuring wrinkles in the uncoated portion of the electrode plate, the first electrode plate transfer unit 110 and the second electrode plate transfer unit 210, and the first wrinkle measurement unit 120 and the second wrinkle measurement unit 220 are designated by different reference numerals for ease of description. However, the first electrode plate transfer unit 110 and the second electrode plate transfer unit 210 are somewhat different in structure but are similar in operation, and the first wrinkle measurement unit 120 and the second wrinkle measurement unit 220 are somewhat different in structure but are similar in operation, which will be referred to hereinafter as an electrode plate transfer unit 110 and a wrinkle measurement unit 120.

The electrode plate transfer unit 110 may include a plurality of rollers (not shown). Each of the rollers may be formed in the shape of a column and may be rotatable in a longitudinal direction. The roller may have a central axis fixed to an external fixing component (not shown) such that an outer circumferential surface thereof may be a reference plane, and the electrode plate 1 may be stably moved in a direction perpendicular to the longitudinal direction of the roller on one side of the outer circumferential surface. The roller may be made of a metal material configured not to be deformed by the electrode plate 1 moved in real time, but in some embodiments, the material for the roller is not limited thereto. The electrode plate transfer unit 110 may use the plurality of rollers to move the electrode plate 1 in the longitudinal direction of the electrode plate 1 (direction perpendicular to the rollers).

The electrode plate 1 may be wound on the rollers and moved in a direction of rotation of the rollers. The electrode plate 1 may be moved in a direction perpendicular to the longitudinal direction of the rollers. The electrode plate 1 may be moved in a direction toward the rollers by an external electrode plate supply component (not shown). The electrode plate 1 may be a positive electrode plate or a negative electrode plate formed by applying an active material to the surface of a current collector of a secondary battery; however, the disclosure does not limit the use and type of the electrode plate 1.

The wrinkle measurement unit 120 may measure wrinkles in the electrode plate 1 in a width direction during transfer of the electrode plate 1 in the longitudinal direction. For example, the wrinkle measurement unit 120 may measure wrinkles while reciprocating in the width direction of the electrode plate 1. In some examples, the measurement position of the wrinkle measurement unit 120 may be fixed and the number of apparatuses may be increased as needed to allow for multiple consecutive measurements.

The wrinkle measurement unit 120 may detect the quantity of light on a target outer surface of the electrode plate 1. The target outer surface of the electrode plate 1 may refer to a region in which the quantity of light is to be detected by the wrinkle measurement unit 120, which is a part of the entirety of the outer surface of the electrode plate 1 moved in real time.

The wrinkle measurement unit 120 may irradiate the target outer surface of the electrode plate 1 with light and may detect the quantity of light on the target outer surface of the electrode plate 1 based on a change in the distribution of the quantity of light reflected from the target outer surface of the electrode plate 1. The wrinkle measurement unit 120 may accordingly comprise a light emitter and a light detector. The wrinkle measurement unit 120 may detect the quantity of light and may transmit a light quantity detection signal to the processor 130 in the form of a voltage output. The wrinkle measurement unit 120 may include a sensing portion 121 configured to sense the quantity of light for wrinkle measurement. The sensing portion 121 may be an optical displacement sensor, such as a two-dimensional and/or three-dimensional laser displacement sensor using an optical cutting method. The light may be a visible, near-infrared, or infrared laser, but the disclosure is not limited by the type of the light. The laser displacement sensor may measure a profile (sectional shape), such as a height, a step, and a width, in a non-contact manner by radiating a line-shaped laser light to the surface of a target object and collecting a change in reflected light with a complementary metal-oxide semiconductor (CMOS). Successively acquired profile data may be imaged to obtain a two-dimensional and/or three-dimensional shape of the target object, thereby realizing high accuracy measurement and inspection. In some embodiments, the type of the sensor applied to the sensing portion 121 is not limited thereto. Any of various light quantity sensors corresponding to a light source may be applied to the sensing portion 121.

The wrinkle measurement unit 120 may further include a transfer frame 122 configured to move the sensing portion 121 of the wrinkle measurement unit 120 to the target outer surface of the electrode plate 1. The transfer frame 122 may include a pole 122a on which the sensing portion 121 is installed and a body 122b connected to the pole 122a. The body 122b may be connected to the pole 122a to fixedly support the support the pole 122a. The transfer frame 122 may be moved relative to the target outer surface of the electrode plate 1 in the longitudinal direction of the rollers (width direction of the electrode plate).

The rotation and movement of the rollers of the electrode plate transfer unit 110, the movement of the electrode plate 1, and operation of the wrinkle measurement unit 120 may be controlled by the processor 130. The electrode plate transfer unit 110 and the wrinkle measurement unit 120 may receive an instruction from the processor 130 to rotate or move the rollers, to move the electrode plate 1, or to operate the wrinkle measurement unit 120.

FIG. 3 is a block diagram schematically showing the apparatus for measuring wrinkles in the uncoated portion of the electrode plate according to some embodiments.

FIG. 3 is a block diagram illustrating the apparatus 100 for measuring wrinkles in the uncoated portion of the electrode plate in terms of a process, such as calculation for wrinkle measurement. Referring to FIG. 3, the processor 130 may acquire wrinkle measurement data of the dried electrode plate 1 through the wrinkle measurement unit 120 and may perform preprocessing to remove a coated region from the acquired wrinkle measurement data based on a preset preprocessing algorithm. The processor 130 may derive the grade of the preprocessed wrinkle measurement data based on a preset wrinkle level determination algorithm. The grade may be a quality measure of the wrinkle level (e.g. size and/or extent of wrinkles), such that a higher grade indicates fewer and/or smaller wrinkles.

In order to implement the process as described above, the processor 130 may further include a communication unit 140, a memory 150, and an input/output unit 160.

The communication unit 140 may provide a communication interface to provide, as packet data, signals transmitted to and received from an external device (including a server) in conjunction with a network. The communication unit 140 may also be a device including hardware and software to transmit and receive a signal, such as a control signal or a data signal, through wired or wireless connection with another network device.

The memory 150 may store various kinds of information to operate the apparatus 100 for measuring wrinkles in the uncoated portion of the electrode plate and control software configured to operate the apparatus 100 for measuring wrinkles in the uncoated portion of the electrode plate, and may include a volatile or non-volatile recording medium. The memory 150 may be connected to the at least one processor 130, and may store code that, if executed by the processor 130, causes the processor 130 to control the apparatus 100 for measuring wrinkles in the uncoated portion of the electrode plate.

The memory 150 may include a magnetic storage medium or a flash storage medium, but the disclosure is not limited thereto. The memory 150 may store an algorithm for performing training according to the disclosure and data associated with the algorithm. Information stored in the memory 150 may be received from a server or an external device or may be input by a user.

In some embodiments, the memory 150 may store first profile data and second profile data obtained by measuring wrinkles in the uncoated portion of the electrode plate. The first profile data may be data generated from a light quantity detection signal for the uncoated portion of the electrode plate, and the second profile data may be corrected data obtained by applying the preset preprocessing algorithm to the first profile data. The memory 150 may store coordinate value data of the sensing portion 121 fixed to the transfer frame 122 along with the first profile data and the second profile data. Consequently, the processor 130 may acquire position-specific wrinkle data of the electrode plate 1.

The processor 130 may continuously manage the first profile data and the second profile data. Consequently, the processor 130 may update the first profile data and the second profile data if wrinkles in the uncoated portion of the electrode plate 1 are expected to be outside of a reference value or at predetermined intervals.

The input/output unit 160 may receive data to be input for measurement of wrinkles in the uncoated portion of the electrode plate. The data may be data input by a user via a user interface or the like or data input from a server or the like. The input/output unit 160 may output the results of measurement of wrinkles in the uncoated portion of the electrode plate 1 calculated by the processor 130. The input/output unit 160 may display the results of measurement of wrinkles in the uncoated portion of the electrode plate 1 moved in real time in the form of a graph or the like such that an operator can easily check the results of measurement of wrinkles in the uncoated portion of the electrode plate 1.

The input/output unit 160 may generate an alarm signal or the like if the results of measurement of wrinkles in the uncoated portion of the electrode plate 1 calculated by the processor 130 deviate (e.g. by a preset amount) from a reference value or reference range. The processor 130 may compare the results of measurement of wrinkles in the uncoated portion of the electrode plate 1 calculated in real time with criteria for determining whether the uncoated portion of the electrode plate 1 is defective. If the wrinkles in the uncoated portion of the electrode plate 1 deviate from the reference value or range, the processor 130 may generate an alarm signal in the form of text or voice through the input/output unit 160 to enable the operator to easily check the state of the wrinkles in the uncoated portion of the electrode plate 1.

The processor 130 may control the operation of the components of the apparatus 100 for measuring wrinkles in the uncoated portion of the electrode plate. The processor 130 may be connected to a power supply (not shown), and may control the supply of power to the components of the apparatus 100 for measuring wrinkles in the uncoated portion of the electrode plate via the power supply.

The processor 130 may control the overall operation of the apparatus 100 for measuring wrinkles in the uncoated portion of the electrode plate. The processor 130 may be connected to the components of the apparatus 100 for measuring wrinkles in the uncoated portion of the electrode plate, including the memory 150, and may execute at least one instruction stored in the memory 150 to control the overall operation of the apparatus 100 for measuring wrinkles in the uncoated portion of the electrode plate.

The processor 130, which may be a central processing unit, may drive the control software stored in the memory 150 to control the overall operation of the apparatus 100 for measuring wrinkles in the uncoated portion of the electrode plate. The processor 130 may include any kind of device capable of processing data. As used herein, "processor" may refer to a data processing device embedded in hardware, for example, having a circuit physically structured to perform a function expressed by code or instructions included in a program.

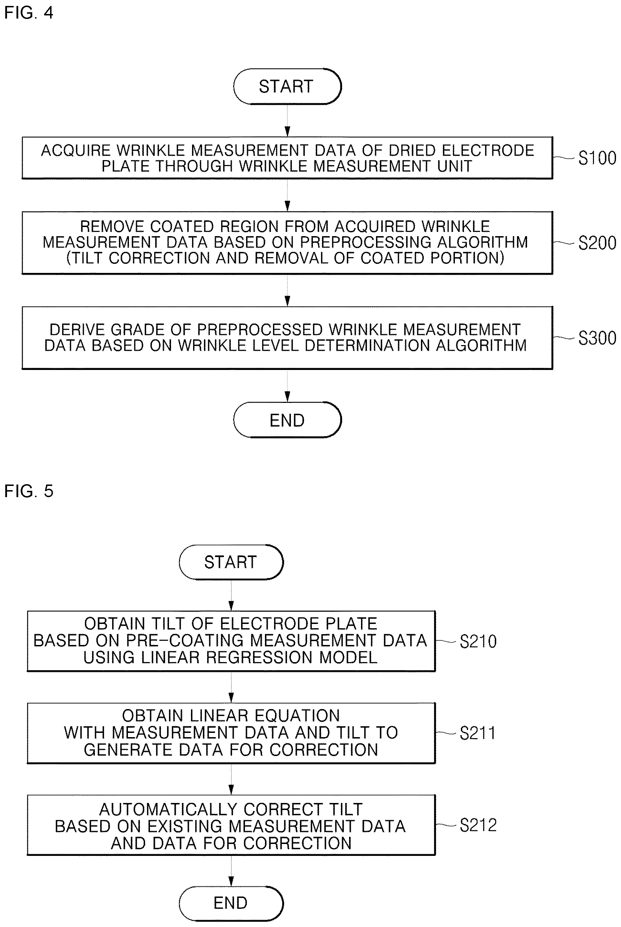

FIG. 4 is a flowchart illustrating a method of measuring wrinkles in an uncoated portion of an electrode plate according to some embodiments. Hereinafter, a process of the processor 130 measuring wrinkles in an uncoated portion of an electrode plate will be described with reference to FIG. 4.

The processor 130 may acquire wrinkle measurement data of the dried electrode plate 1 through the wrinkle measurement unit 120 (S100).

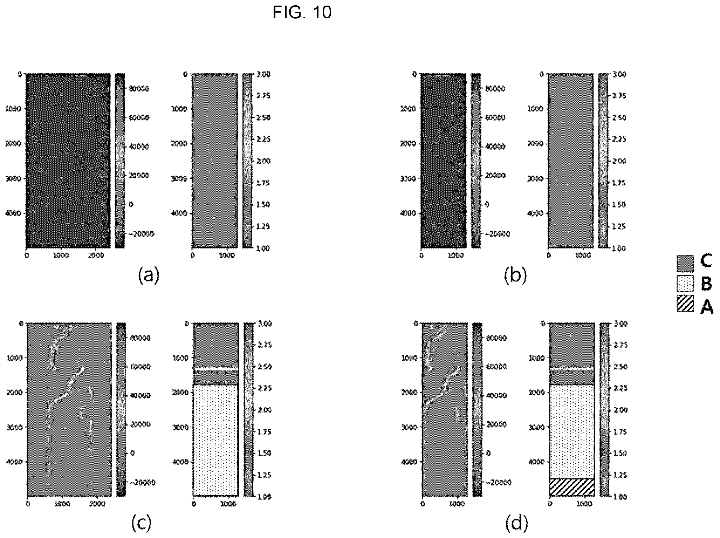

The wrinkle measurement data may include position-specific wrinkle height value data of the dried electrode plate 1 and image data converted based on position-specific wrinkle height values of the dried electrode plate 1 (see the left figure of each of (a) to (d) of FIG. 10). In some examples, a data can be acquired from the wrinkle measurement unit 120 and processed to generate images based on the data. For example, a height variation data of the surface can be acquired. This data can be obtained in XYZ coordinates. Additionally, the acquired data can be mapped based on the wrinkle height values. For example, different colors can be assigned according to the height to convert it into a 2D color map. In some examples, 3D data can be converted into a 2D image, typically through color mapping or grayscale conversion. In some examples, images can be generated by assigning colors differently based on the wrinkle height values. For example, lower heights can be represented with darker colors and higher heights with lighter colors.

The processor 130 may measure the state of wrinkles in the A side of the electrode plate 1 through the first wrinkle measurement unit 120, and may measure the state of wrinkles in the B side of the electrode plate 1 through the second wrinkle measurement unit 220. The processor 130 may continuously acquire widthwise position-specific wrinkle measurement data within a reference length of the electrode plate 1 in the longitudinal direction (e.g., 10 m or 150 m).

The processor 130 may perform preprocessing to remove a coated region from the acquired wrinkle measurement data based on a preprocessing algorithm (S200).

The processor 130 may be set to determine the grade of the preprocessed wrinkle measurement data based on a preset height data absolute value and ratio.

The preset preprocessing algorithm may include a tilt correction algorithm and a coated portion removal algorithm. The tilt correction algorithm may be configured to correct the tilt based on the acquired wrinkle measurement data utilizing a linear regression model. The coated portion removal algorithm may be configured to remove the coated portion by deriving a coating boundary based on the average data of the tilt-corrected wrinkle measurement data. The coated portion removal algorithm may thus identify a boundary of a coated region, and remove that region from the measurement data.

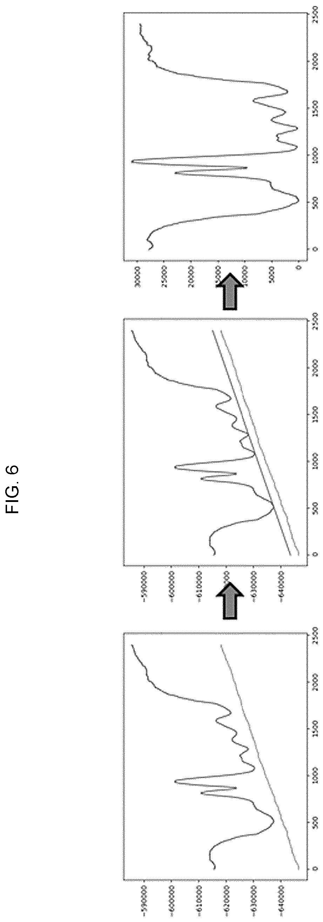

FIG. 5 is a flowchart illustrating a tilt correction algorithm according to some embodiments. FIG. 6 is a graph illustrating the results of the tilt correction algorithm according to some embodiments.

In some embodiments, the position (height) of the uncoated portion of the electrode plate 1 may vary depending on drying conditions and thus may not be accurately leveled with the measurement sensor (a problem with leveling of the measurement sensor being also included depending on circumstances). The processor 130 may apply the tilt correction algorithm to remove errors due to tilting of the uncoated portion of the electrode plate 1.

Hereinafter, a process of the processor 130 applying the tilt correction algorithm will be described with reference to FIGs. 5 and 6.

Referring to the left figure of FIG. 6, the processor 130 may calculate a tilt using a linear regression model based on the average data of pre-coating data in order to correct the tilt (S210). The processor 130 may derive at least one point (x1, y1) of the uncoated portion based on the calculated tilt. The processor 130 may simultaneously acquire the pre-coating data of the electrode plate during measurement of wrinkles in the uncoated portion of the electrode plate. The tilt of the electrode plate may be obtained from the pre-coating data using a linear regression model.

Referring to the middle figure of FIG. 6, the processor 130 may obtain a linear equation based on one point and the tilt to generate data for correction (S211). Referring to the right figure of FIG. 6, the processor 130 may correct the tilt based on the acquired wrinkle measurement data and the data for correction (S212). The processor 130 may obtain a linear equation with the measurement data and the tilt to generate data for correction, and may automatically correct the tilt from the existing measurement data and the data for correction.

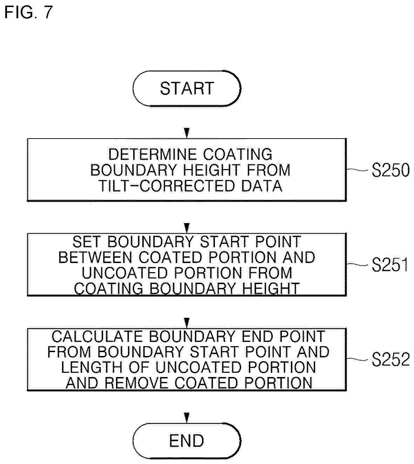

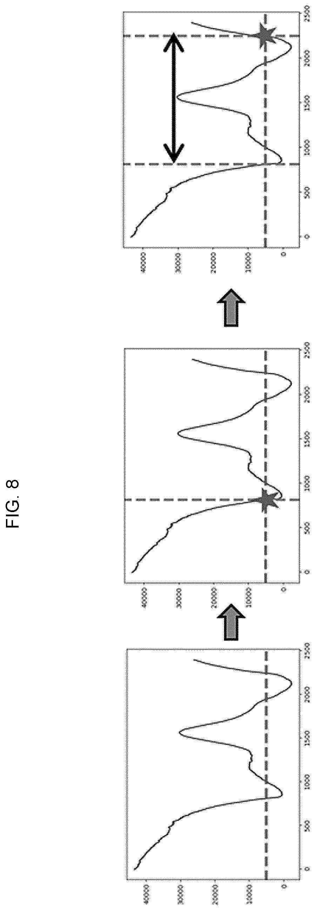

FIG. 7 is a flowchart illustrating a coated portion removal algorithm according to some embodiments. FIG. 8 is a graph illustrating the results of the coated portion removal algorithm according to some embodiments.

The coated portion (coated region) of the electrode plate 1 may have a relatively large height value due to the active material applied thereto. If the level of wrinkles is determined including such information, therefore, the determined level of wrinkles may be different from the actual level of wrinkles. Consequently, the processor 130 may apply the coated portion removal algorithm to remove the influence of the coated portion of the electrode plate 1 measured together with the uncoated portion.

Hereinafter, a process of the processor 130 applying the coated portion removal algorithm will be described with reference to FIGs. 7 and 8.

Referring to the left figure of FIG. 8, in order to remove the coated portion of the electrode plate 1, the processor 130 may calculate average data of the tilt-corrected wrinkle measurement data and may derive a coating boundary based on the average data (S250).

In some embodiments, the processor 130 may set the average data as a coating boundary height to derive the coating boundary. For example, the coating boundary height may be set to 0.05 mm or less, but this may be changed if the coating height is changed. The processor 130 may select a point at or below the average data height of 5000 (0.05 mm) of the tilt-corrected wrinkle measurement data.

Referring to the middle figure of FIG. 8, the processor 130 may set an initial value of the points below the set coating boundary height as a boundary start point (see the star mark) (S251). For example, the processor 130 may set an initial value of points having a height of 0.05 mm or less as the boundary start point.

Referring to the right figure of FIG. 8, the processor 130 may set a boundary end point (see the star mark) in addition to the boundary start point based on a value obtained by converting the length of the uncoated portion into the number of points (S252). The processor 130 may obtain the length of the uncoated portion from a design value of the electrode plate 1, and may convert the same into the number of data points using information about the distance (width) between the measurement data.

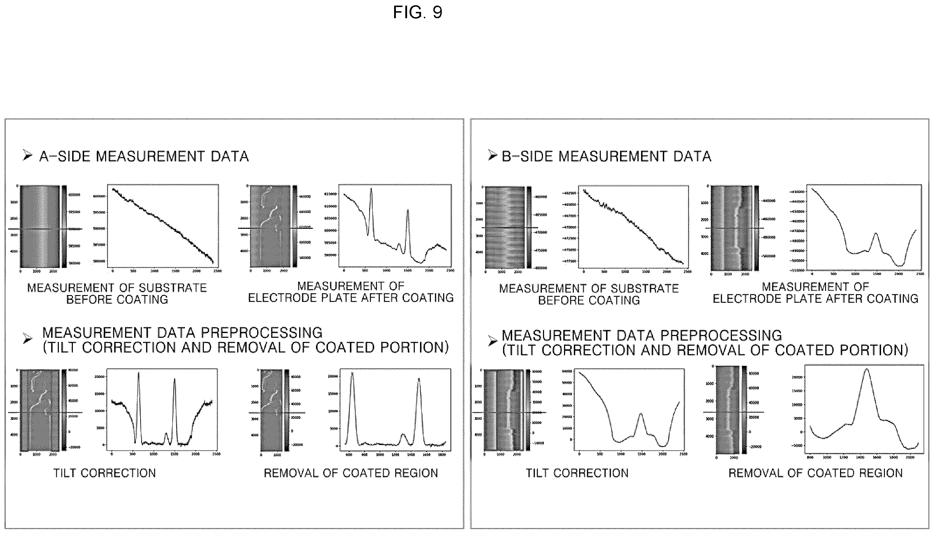

FIG. 9 is a graph illustrating the results of a preprocessing algorithm according to some embodiments. FIG. 10 is a view showing results with and without the application of the preprocessing algorithm according to some embodiments for comparison therebetween.

Referring to FIGs. 9 and 10, it can be seen from the results measured after coating of the electrode plate 1 that the clearest graphs for wrinkle positions are obtained if the tilt is corrected and the coated region is removed.

Referring to FIG. 10, (a) shows the case in which neither the coated portion removal algorithm nor the tilt correction algorithm is applied, (b) shows the case in which only the coated portion removal algorithm is applied, (c) shows the case in which only the tilt correction algorithm is applied, and (d) shows the case in which both the coated portion removal algorithm and the tilt correction algorithm are applied. Similarly to FIG. 9, it can be seen that the clearest results for wrinkle positions are obtained if both the coated portion removal algorithm and the tilt correction algorithm are applied. Therefore, the preprocessing algorithm according to some embodiments must include both the coated portion removal algorithm and the tilt correction algorithm.

After the preprocessing algorithm is performed, the processor 130 may derive the grade of the preprocessed wrinkle measurement data based on the preset wrinkle level determination algorithm (S300).

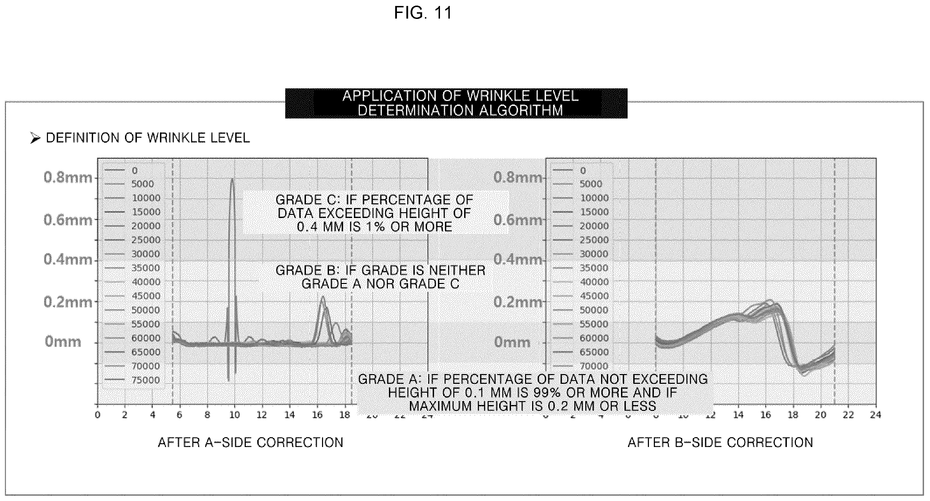

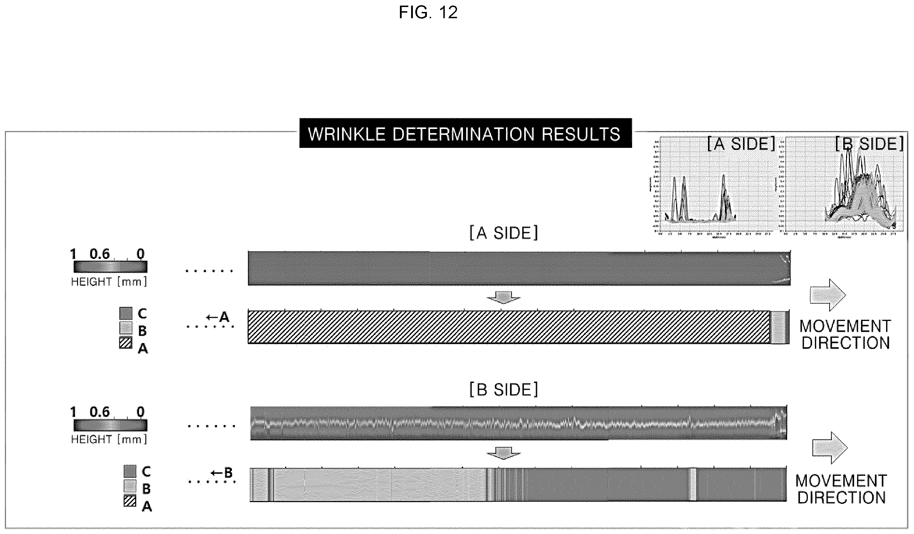

FIG. 11 is a graph illustrating grade criteria of a wrinkle level determination algorithm according to some embodiments. FIG. 12 is a view showing wrinkle determination results according to some embodiments.

In some embodiments, the preset wrinkle level determination algorithm may be set to determine the grade of the preprocessed wrinkle measurement data based on the preset height data absolute value and ratio. Referring to FIG. 11, the processor 130 may derive the grade for the wrinkle level of the preprocessing-corrected electrode plate 1 for a given position by comparing the position-specific (horizontal axis of the graph) wrinkle height (vertical axis of the graph) per position of the preprocessing-corrected electrode plate 1 with criteria set based on the preset height data absolute value and ratio. Referring to FIG. 12, the processor 130 may diagrammatically display the position-specific grade result of the electrode plate 1.

For example, the wrinkle level grade may be set to grade A, grade B, or grade C. For example, if the percentage of data exceeding a height of 0.4 mm is 1% or more, the wrinkle level grade may be set to grade C. If the percentage of data not exceeding a height of 0.1 mm is 99% or more and if the maximum height is 0.2 mm or less, the wrinkle level grade may be set to grade A. If the wrinkle level grade is neither grade A nor grade C, the wrinkle level grade may be set to grade B. However, the grades and the criteria of the grades are not limited thereto and may be changed according to settings.

The processor 130 may be set to ultimately determine the lowest grade for a given region if several other grades are determined within the set length of the dried electrode plate 1 in the longitudinal direction. For example, if grade A and grade B are derived for a specific region, the region may be determined to be grade B. This ensures that only regions with entirely a high grade will be assigned a high grade, thereby ensuring quality of the produced electrode plate.

As is apparent from the above description, an apparatus and method for measuring wrinkles in an uncoated portion of an electrode plate according to embodiments are capable of measuring wrinkles in an uncoated portion of an electrode plate after drying of the electrode plate based on a quantification algorithm for wrinkle measurement in real time and providing quantitative determination results, whereby it is possible to determine the level of wrinkles based on objective criteria. Consequently, the accuracy of wrinkle determination may be improved, and therefore the level of completion of a product may be improved.

Although the present disclosure has been described with reference to embodiments and drawings illustrating aspects thereof, the present disclosure is not limited thereto. Various modifications and variations can be made by a person skilled in the art to which the present disclosure belongs within the scope of the technical of the present disclosure and the claims and their equivalents, below.

Embodiments of the invention are set out in the following numbered clauses:
1. An apparatus for measuring wrinkles in an uncoated portion of an electrode plate, the apparatus comprising:
   an electrode plate transfer unit configured to transfer a dried electrode plate in a longitudinal direction;
   a wrinkle measurement unit configured to measure wrinkles in the dried electrode plate in a width direction during transfer of the dried electrode plate in the longitudinal direction;
   a memory configured to store a preset preprocessing algorithm and a preset wrinkle level determination algorithm based on pre-coating measurement data of the dried electrode plate; and
   at least one processor connected to the memory, the at least one processor being configured to execute computer-readable instructions included in the memory,
   wherein the at least one processor is set:
      to acquire wrinkle measurement data of the dried electrode plate through the wrinkle measurement unit;
      to perform preprocessing to remove a coated portion, which is a coated region, from the acquired wrinkle measurement data based on the preset preprocessing algorithm; and
      to derive a grade of the preprocessed wrinkle measurement data based on the preset wrinkle level determination algorithm.
2. The apparatus of clause 1, wherein the wrinkle measurement data comprises position-specific wrinkle height value data of the dried electrode plate and image data converted based on position-specific wrinkle height values of the dried electrode plate.
3. The apparatus of clause 1 or clause 2, wherein the wrinkle measurement unit comprises:
   a first wrinkle measurement unit located above an A side of the dried electrode plate to measure wrinkles in the A side, the first wrinkle measurement unit being configured to continuously acquire position-specific wrinkle measurement data within a reference length of the A side in the longitudinal direction; and
   a second wrinkle measurement unit located above a B side of the dried electrode plate to measure wrinkles in the B side, the second wrinkle measurement unit being configured to continuously acquire position-specific wrinkle measurement data within a reference length of the B side in the longitudinal direction.
4. The apparatus of any preceding clause, wherein the wrinkle measurement unit comprises a two-dimensional and/or three-dimensional laser displacement sensor.
5. The apparatus of any preceding clause, wherein the at least one processor is set:
   to correct a tilt of the dried electrode plate based on the acquired wrinkle measurement data in order to perform the preprocessing; and
   to remove the coated portion based on the tilt-corrected wrinkle measurement data.
6. The apparatus of clause 5, wherein the at least one processor is set:
   to calculate the tilt of the dried electrode plate using a linear regression model based on average data of pre-coating data in order to correct the tilt of the dried electrode plate;
   to derive one minimum point of the uncoated portion based on the calculated tilt of the dried electrode plate;
   to obtain a linear equation based on the one minimum point of the uncoated portion and the tilt of the dried electrode plate to generate data for correction; and
   to correct the tilt of the dried electrode plate based on the acquired wrinkle measurement data and the data for correction.
7. The apparatus of clause 5 or clause 6, wherein the at least one processor is set:
   to calculate average data of the tilt-corrected wrinkle measurement data in order to remove the coated portion; and
   to derive a coating boundary based on the average data.
8. The apparatus of clause 7, wherein the at least one processor is set:
   to set the average data as a coating boundary height in order to derive the coating boundary;
   to set an initial value of points equal to or less than the set coating boundary height as a boundary start point; and
   to set a boundary end point in addition to the boundary start point based on a value obtained by converting a length of the uncoated portion into the number of points.
9. The apparatus of any preceding clause, wherein the preset wrinkle level determination algorithm is set to determine the grade of the preprocessed wrinkle measurement data based on a preset height data absolute value and ratio.
10. The apparatus of any preceding clause, wherein the at least one processor is set to determine, if another grade is determined within a set length of the dried electrode plate in the longitudinal direction, the other grade to be a lowest grade.
11. A method of measuring wrinkles in an uncoated portion of an electrode plate, at least a part of each step being performed by a processor, the method comprising:
   acquiring wrinkle measurement data of a dried electrode plate through a wrinkle measurement unit configured to measure wrinkles in the dried electrode plate in a width direction during transfer of the dried electrode plate in a longitudinal direction through an electrode plate transfer unit;
   performing preprocessing to remove a coated portion, which is a coated region, from the acquired wrinkle measurement data based on a preset preprocessing algorithm; and
   deriving a grade of the preprocessed wrinkle measurement data based on a preset wrinkle level determination algorithm.
12. The method of clause 11, wherein the wrinkle measurement data comprises position-specific wrinkle height value data of the dried electrode plate and image data converted based on position-specific wrinkle height values of the dried electrode plate.
13. The method of clause 11 or clause 12, wherein the step of acquiring the wrinkle measurement data of the dried electrode plate comprises:
   continuously acquiring position-specific wrinkle measurement data within a reference length of an A side of the dried electrode plate in the longitudinal direction through a first wrinkle measurement unit located above the A side to measure wrinkles in the A side; and
   continuously acquiring position-specific wrinkle measurement data within a reference length of a B side of the dried electrode plate in the longitudinal direction through a second wrinkle measurement unit located above the B side to measure wrinkles in the B side.
14. The method of any of clauses 11 to 13, wherein the wrinkle measurement unit comprises a two-dimensional and/or three-dimensional laser displacement sensor.
15. The method of any of clauses 11 to 14, wherein the step of performing the preprocessing comprises:
   correcting a tilt of the dried electrode plate based on the acquired wrinkle measurement data; and
   removing the coated portion based on the tilt-corrected wrinkle measurement data.
16. The method of clause 15, wherein the step of correcting the tilt of the dried electrode plate comprises:
   calculating the tilt of the dried electrode plate using a linear regression model based on average data of pre-coating data in order to correct the tilt of the dried electrode plate;
   deriving one minimum point of the uncoated portion based on the calculated tilt of the dried electrode plate;
   obtaining a linear equation based on the one minimum point of the uncoated portion and the tilt of the dried electrode plate to generate data for correction; and
   correcting the tilt of the dried electrode plate based on the acquired wrinkle measurement data and the data for correction.
17. The method of clause 15 or clause 16, wherein the step of removing the coated portion comprises:
   calculating average data of the tilt-corrected wrinkle measurement data; and
   deriving a coating boundary based on the average data.
18. The method of clause 17, wherein the step of deriving the coating boundary comprises:
   setting the average data as a coating boundary height;
   setting an initial value of points equal to or less than the set coating boundary height as a boundary start point; and
   setting a boundary end point in addition to the boundary start point based on a value obtained by converting a length of the uncoated portion into the number of points.
19. The method of any of clauses 11 to 18, wherein the preset wrinkle level determination algorithm is set to determine the grade of the preprocessed wrinkle measurement data based on a preset height data absolute value and ratio.
20. The method of any of clauses 11 to 19, wherein the step of deriving the grade of the preprocessed wrinkle measurement data comprises determining, if another grade is determined within a set length of the dried electrode plate in the longitudinal direction, the other grade to be a lowest grade.

## Claims

1. An apparatus for measuring wrinkles in an uncoated portion of an electrode plate, the apparatus comprising:
an electrode plate transfer unit configured to transfer a dried electrode plate in a longitudinal direction;
a wrinkle measurement unit configured to measure wrinkles in the dried electrode plate in a width direction during transfer of the dried electrode plate in the longitudinal direction;
a memory configured to store a preset preprocessing algorithm and a preset wrinkle level determination algorithm based on pre-coating measurement data of the dried electrode plate; and
at least one processor connected to the memory, the at least one processor being configured to execute computer-readable instructions included in the memory,
wherein the instructions are configured to cause the at least one processor:
to acquire wrinkle measurement data of the dried electrode plate through the wrinkle measurement unit;
to perform preprocessing to remove a coated portion, which is a coated region, from the acquired wrinkle measurement data based on the preset preprocessing algorithm; and
to derive a grade of the preprocessed wrinkle measurement data based on the preset wrinkle level determination algorithm.

2. The apparatus as claimed in claim 1, wherein the wrinkle measurement data comprises position-specific wrinkle height value data of the dried electrode plate and image data converted based on position-specific wrinkle height values of the dried electrode plate.

3. The apparatus as claimed in claim 1 or claim 2, wherein the wrinkle measurement unit comprises:
a first wrinkle measurement unit located above an A side of the dried electrode plate to measure wrinkles in the A side, the first wrinkle measurement unit being configured to continuously acquire position-specific wrinkle measurement data within a reference length of the A side in the longitudinal direction; and
a second wrinkle measurement unit located above a B side of the dried electrode plate to measure wrinkles in the B side, the second wrinkle measurement unit being configured to continuously acquire position-specific wrinkle measurement data within a reference length of the B side in the longitudinal direction.

4. The apparatus as claimed in any preceding claim, wherein the wrinkle measurement unit comprises a two-dimensional and/or three-dimensional laser displacement sensor.

5. The apparatus as claimed in any preceding claim, wherein the instructions are configured to cause the at least one processor:
to correct a tilt of the dried electrode plate based on the acquired wrinkle measurement data in order to perform the preprocessing; and
to remove the coated portion based on the tilt-corrected wrinkle measurement data.

6. The apparatus as claimed in claim 5, wherein the instructions are configured to cause the at least one processor:
to calculate the tilt of the dried electrode plate using a linear regression model based on average data of pre-coating data in order to correct the tilt of the dried electrode plate;
to derive one minimum point of the uncoated portion based on the calculated tilt of the dried electrode plate;
to obtain a linear equation based on the one minimum point of the uncoated portion and the tilt of the dried electrode plate to generate data for correction; and
to correct the tilt of the dried electrode plate based on the acquired wrinkle measurement data and the data for correction.

7. The apparatus as claimed in claim 5 or claim 6, wherein the instructions are configured to cause the at least one processor:
to calculate average data of the tilt-corrected wrinkle measurement data in order to remove the coated portion; and
to derive a coating boundary based on the average data.

8. The apparatus as claimed in claim 7, wherein the instructions are configured to cause the at least one processor:
to set the average data as a coating boundary height in order to derive the coating boundary;
to set an initial value of points equal to or less than the set coating boundary height as a boundary start point; and
to set a boundary end point in addition to the boundary start point based on a value obtained by converting a length of the uncoated portion into the number of points.

9. The apparatus as claimed in any preceding claim, wherein the preset wrinkle level determination algorithm is configured to determine the grade of the preprocessed wrinkle measurement data based on a preset height data absolute value and ratio.

10. The apparatus as claimed in any preceding claim, wherein the instructions are configured to cause the at least one processor to determine, if more than one grades are determined within a set length of the dried electrode plate in the longitudinal direction, the lowest grade among the more than one grades as the derived grade.

11. A method of measuring wrinkles in an uncoated portion of an electrode plate, at least a part of each step being performed by a processor, the method comprising:
acquiring wrinkle measurement data of a dried electrode plate through a wrinkle measurement unit configured to measure wrinkles in the dried electrode plate in a width direction during transfer of the dried electrode plate in a longitudinal direction through an electrode plate transfer unit;
performing preprocessing to remove a coated portion, which is a coated region, from the acquired wrinkle measurement data based on a preset preprocessing algorithm; and
deriving a grade of the preprocessed wrinkle measurement data based on a preset wrinkle level determination algorithm.

12. The method as claimed in claim 11, wherein the wrinkle measurement data comprises position-specific wrinkle height value data of the dried electrode plate and image data converted based on position-specific wrinkle height values of the dried electrode plate.

13. The method as claimed in claim 11 or claim 12, wherein the step of acquiring the wrinkle measurement data of the dried electrode plate comprises:
continuously acquiring position-specific wrinkle measurement data within a reference length of an A side of the dried electrode plate in the longitudinal direction through a first wrinkle measurement unit located above the A side to measure wrinkles in the A side; and
continuously acquiring position-specific wrinkle measurement data within a reference length of a B side of the dried electrode plate in the longitudinal direction through a second wrinkle measurement unit located above the B side to measure wrinkles in the B side.

14. The method as claimed in any of claims 11 to 13, wherein the wrinkle measurement unit comprises a two-dimensional and/or three-dimensional laser displacement sensor.

15. The method as claimed in any of claims 11 to 14, wherein the step of performing the preprocessing comprises:
correcting a tilt of the dried electrode plate based on the acquired wrinkle measurement data; and
removing the coated portion based on the tilt-corrected wrinkle measurement data.
